# EUROPÄISCHE PATENTSCHRIFT

(11) **EP 1 215 373 B1**
(45) Veröffentlichungstag und Bekanntmachung des Hinweises auf die Patenterteilung: **08.06.2005**
(21) Anmeldenummer: 01128290.2
(22) Anmeldetag: 29.11.2001
(51) Int. Cl.: F01N 3/20, F01N 3/08, B01D 53/94, A62B 9/04, F16L 29/02, F16L 37/40

(54) **Abgasreinigungsanlage zum Entsticken von Abgasen einer Brennkraftmaschine**
Exhaust gas purification apparatus to eliminate NOx from the exhaust gas of an internal combustion engine
Dispositif de purification des gaz d'échappement pour éliminer les oxydes d'azote contenus dans le gaz d'échappement d'un moteur à combustion interne

(30) Priorität: 18.12.2000 DE 20021398 U
(43) Veröffentlichungstag der Anmeldung: 19.06.2002
(73) Patentinhaber: PUReM Abgassysteme GmbH & Co. KG, 58706 Menden (DE)
(72) Erfinder: Hüthwohl, Georg Dr.-Ing., 59494 Soest (DE); Mauer, Bernd Dr., 58802 Balve (DE); Funk, Alexander, 58640 Iserlohn (DE)
(74) Vertreter: Dahmen, Toni Dipl.-Ing.

(56) Entgegenhaltungen:
- EP-A- 1 199 449
- DE-U- 29 708 591
- GB-A- 2 249 610
- US-A- 4 332 273

## Beschreibung

Die Erfindung betrifft eine Abgasreinigungsanlage zum Reinigen von Abgasen einer Brennkraftmaschine an einem SCR-Katalysator unter Verwendung von zusätzlich in den Abgasstrom vor dem SCR-Katalysator eingebrachtem Reduktionsmittel, umfassend einen Reduktionsbehälter, in dem das dem Abgasstrom zuzuführende Reduktionsmittel bevorratet ist und der über eine Versorgungsleitung mit dem Abgasstrang verbunden ist. Ferner betrifft die Erfindung eine Vorrichtung zum Halten und Anschließen eines Reduktionsbehälters im Rahmen eines Wechselbehältersystems an eine Abgasreinigungsanlage. Des weiteren betrifft die Erfindung einen Behälter für Reduktionsmittel zum Einsatz in einer Abgasreinigungsanlage.

Neben Kohlenmonoxid (CO) und Kohlenwasserstoffen (HC) gehören insbesondere Stickoxide (NOₓ) zu den umweltgefährdenden direkt emittierten Primärschadstoffen, die beim Betrieb von Verbrennungsmotoren, insbesondere Dieselmotoren, entstehen. Dreiwegekatalysatoren, wie sie bei Ottomotoren und Gasmotoren verwendet werden, sind aufgrund eines Sauerstoffüberschusses im dieselmotorischen Abgas nicht einsetzbar. Aus diesem Grunde wurde zur Reduktion der Stickoxidemission ein selektiv arbeitender SCR-Katalysator (Selective Catalytic Reduction-Katalysator) entwickelt, in dem mit einem zugeführten Reduktionsmittel, wie Ammoniak (NH₃) die ausgestoßenen Stickoxide zu N₂ und H₂O reduziert werden.

Derartige Abgasreinigungsanlagen sind beispielsweise aus EP 0 277 765 A1 oder EP 0 381 236 A1 bekannt. NH₃ ist als Flüssigkeit in einem druckfesten Behälter bevorratet und über eine Versorgungsleitung mit dem Abgasstrang verbunden. Abgegriffen wird aus dem Reduktionsbehälter gasförmiges NH₃, das über ein durch eine Steuereinheit angesteuertes Dosierventil in der benötigten Menge in den Abgasstrom eingedüst wird. Eine Mengendosierung erfolgt in Abhängigkeit von den aktuellen Betriebszuständen des Verbrennungsmotors.

Bei diesen vorbekannten Anlagen werden handelsübliche druckfeste Gasflaschen als Reduktionsbehälter eingesetzt. Die Behälter sind in herkömmlicher Art und Weise mittels einer Schraubverbindung an die Versorgungsleitung angeschlossen. Bei einem Einsatz einer solchen vorbekannten Abgasreinigungsanlage in einem Kraftfahrzeug, beispielsweise einem Lastkraftwagen, ist man bestrebt, die eingesetzten Reduktionsbehälter aus sicherheitstechnischen Erwägungen, aber insbesondere auch aus handhabungstechnischen Gründen nicht zu groß vorzusehen. Daher müssen die Reduktionsbehälter bei solchen, in einem Kraftfahrzeug eingesetzte Abgasreinigungsanlagen des öfteren gewechselt werden. Zum Wechseln eines solchen Reduktionsbehälters ist es jedoch aus handhabungstechnischen Gründen unzweckmäßig und entsprechend zeitaufwendig, wenn bei einer oder mehreren mitgeführten NH₃-Gasflaschen zunächst sämtliche Verbindungen abgeschraubt und anschließend an neu eingesetzte gefüllte Reduktionsbehälter angeschraubt werden müssen. Überdies ist bei einem solchen herkömmlichen Anschluß vorbekannter Reduktionsbehälter von Nachteil, daß die die Reduktionsbehälter wechselnde Person sich notwendigerweise in direkter Nähe zu dem freien Ende der Versorgungsleitung befindet, so daß nicht ausgeschlossen werden kann, daß sie in Kontakt mit aus der Versorgungsleitung ausströmendem gasförmigen NH₃ kommt.

In der nicht vorveröffentlichten EP 1 199 449 A2 ist ferner ein Ammoniak-Versorgungssystem für Abgaskatalysatorsysteme für Kraftfahrzeuge beschrieben, bei welchem flüssiges NH₃ eingesetzt wird, welches einem austauschbaren Vorratsbehälter mit einem besonderen Ventilsystem entnommen wird. Dabei kann für den Vorratsbehälter eine besondere Aufnahmevorrichtung vorgesehen sein.

Ausgehend von diesem diskutierten Stand der Technik liegt der Erfindung die Aufgabe zugrunde, eine eingangs genannte, gattungsgemäße Abgasreinigungsanlage dergestalt weiterzubilden, daß die zum Stand der Technik aufgezeigten Nachteile minimiert, wenn nicht sogar vermieden sind.

Diese Aufgabe wird erfindungsgemäß zum einen dadurch gelöst, daß der zumindest eine Reduktionsbehälter in einer Andockeinrichtung als Teil der Abgasreinigungsanlage gehalten und über eine Kupplung mit der Versorgungsleitung verbunden ist, wobei von der Kupplung das eine Kupplungsteil der Andockeinrichtung und das andere Kupplungsteil dem Reduktionsmittelbehälter zugeordnet ist und beide Kupplungsteile über eine axiale, gegeneinander gerichtete Bewegung miteinander in Eingriff stellbar sind, und die Andockeinrichtung und der zumindest eine Reduktionsmittelbehälter zusammenwirkende Führungsmittel aufweisen, durch die der zumindest eine Reduktionsmittelbehälter geführt in seine bestimmungsgemäße Position zum Zusammenführen der beiden Kupplungsteile bringbar ist. Dabei umfasst die Andockeinrichtung Führungsstangen, auf denen der zumindest eine Reduktionsmittelbehälter in seine bestimmungsgemäße Stellung bringbar ist und auf denen er aufliegt.

Ferner wird die Aufgabe durch eine Vorrichtung zum Halten und Anschließen eines Reduktionsbehälters im Rahmen eines Wechselbehältersystems an eine Abgasreinigungsanlage gelöst, welches durch die kennzeichnenden Merkmale des Anspruchs 23 bestimmt ist. Des weiteren wird diese Aufgabe durch einen Reduktionsmittelbehälter zum Einsatz in einer eingangs genannten Abgasreinigungsanlage mit den Merkmalen des Anspruchs 24 gelöst.

Die erfindungsgemäße Abgasreinigungsanlage umfaßt eine Andockeinrichtung zur Aufnahme eines oder mehrerer Reduktionsbehälter. Diese Andockeinrichtung verfügt über ein Kupplungsteil, welches zum Erstellen einer F!üssigkeitsverbindung zwischen dem Reduktionsbehälter und der Versorgungsleitung mit einem zweiten, dem Reduktionsbehälter zugeordneten Kupplungsteil in Eingriff stellbar ist. Die beiden Kupplungsteile sind nach Art einer Schnellkupplung ausgelegt und zumindest anteilig über eine axiale, gegeneinander gerichtete Bewegung miteinander in Eingriff zu stellen. Zum Verbinden der beiden Kupplungsteile kann es daher ausreichend sein, die beiden Kupplungsteile allein axial aufeinander zu zu bewegen, bis letztendlich die bestimmungsgemäße Verbindung hergestellt ist. Ebenfalls kann vorgesehen sein, daß die axiale Bewegung lediglich ein vektorieller Anteil einer Zusammenführbewegung der beiden Kupplungsteile darstellt, an der ebenfalls ein rotatorischer Anteil enthalten ist. In einem solchen Fall können die beiden Kupplungsteile beispielsweise durch ein Bajonett miteinander in Eingriff gestellt werden. Die Andockeinrichtung umfaßt ferner Führungsmittel, durch die ein Reduktionsbehälter in seine bestimmungsgemäße Position zum Zusammenführen der beiden Kupplungsteile bringbar ist. Dabei können die Führungsmittel solche Mittel umfassen, die zum Führen und Abstützen des Reduktionsbehälters als solchen dienen und ferner Führungsmittel aufweisen, die vorgesehen sind, um die beiden Kupplungsteile bestimmungsgemäß miteinander in Eingriff zu stellen.

Bei einer mit einer solchen Andockeinrichtung ausgestatteten Abgasreinigungsanlage kann nicht nur ein rascher Wechsel der eingesetzten Reduktionsbehälter erfolgen, sondern insbesondere können durch die eingesetzten Führungsmittel der oder die Reduktionsbehälter an die Versorgungsleitung angeschlossen werden, ohne daß unmittelbar zum Zusammenführen der Kupplungsteile jemand die Kupplungsteile selbst führen muß. Somit kann ein solcher Reduktionsbehälter in der Andockeinrichtung an die Abgasreinigungsanlage angeschlossen werden, in dem der Reduktionsbehälter an seinem dem Kupplungsteil gegenüber liegendem Ende - dem Gefäßboden - gehandhabt wird und sich die den Behälterwechsel durchführende Person somit in einem relativ großen Abstand zu den beiden miteinander in Eingriff zu stellenden Kupplungsteilen befindet. Zu diesem Zweck weist ein Reduktionsbehälter für eine solche Abgasreinigungsanlage an seinem dem Kupplungsteil gegenüber liegenden Fußende eine Handhabe zum Handhaben des Reduktionsbehälters auf. Als Handhabe kann beispielsweise ein den Boden des Reduktionsbehälters umgebender Ring mit darin eingebrachten Grifföffnungen sein. Zu diesem Zweck sind die Reduktionsbehälter in der Andockeinrichtung zweckmäßigerweise liegend gehalten.

Zum Auffangen von Vibrationen des Reduktionsbehälters beim Betrieb eines Kraftfahrzeuges gegenüber der Versorgungsleitung und den in die Versorgungsleitung eingeschalteten Aggregaten ist das der Andockeinrichtung zugeordnete Kupplungsteil zweckmäßigerweise spannungsentkoppelt an der Andockeinrichtung befestigt. Beispielsweise kann dies durch eine schwimmende Lagerung des Kupplungsteils und durch eine Schlauchverbindung zwischen dem Kupplungsteil und der Versorgungsleitung realisiert sein.

Umfaßt die Abgasreinigungsanlage Führungsmittel zum In-Eingriff-Stellen der beiden Kupplungsteile miteinander, die nach Art einer Bajonettverriegelung ausgebildet sind, ist es zweckmäßig, diese jeweils in konzentrisch zueinander angeordneten Ringkörpem vorzusehen, wobei dem Reduktionsbehälter ein solcher konzentrisch das diesem zugeordnete Kupplungsteil umgebender Ringkörper mit einer oder auch mehreren darin eingebrachten oberseitig offenen Bajonettnuten und ein weiterer Ringkörper konzentrisch zu dem der Andockeinrichtung zugeordneten Kupplungsteil mit einer der Anzahl der Bajonettnuten entsprechenden Anzahl an Führungszapfen zugeordnet sind. Der Einsatz einer solchen Bajonettverriegelung zwischen dem Reduktionsbehälter und der Andockeinrichtung stellt eine geführte Bewegung bereit, mit der sowohl ein axialer Hub als auch eine rotatorische Bewegung der beiden Kupplungsteile gegeneinander ausübbar ist. Dabei kann vorgesehen sein, daß die eingesetzten Führungsnuten in einem letzten Abschnitt keine Steigung aufweisen, welches dann zweckmäßig ist, wenn als Kupplung eine solche eingesetzt ist, bei der nach Erstellen der bestimmungsgemäßen Verbindung durch eine abschließende rotatorische Bewegung der beiden Kupplungsteile gegeneinander eine tatsächliche Öffnung zum Erstellen der gewünschten Flüssigkeitsverbindung erfolgt.

In einer weiteren Ausgestaltung einer solchen Abgasreinigungsanlage ist vorgesehen, daß der oder die in die Andockeinrichtung eingesetzten Reduktionsbehälter zusätzlich durch eine Verriegelungseinrichtung verriegelt sind, um die in die Andockeinrichtung eingesetzten Reduktionsbehälter zu sichern. Bei Einsatz einer solchen Verriegelungseinrichtung ist es zweckmäßig, Mittel vorzusehen, die nur dann ein Schließen der Verriegelungseinrichtung erlauben, wenn der oder die in die Andockeinrichtung eingesetzten Reduktionsbehälter bestimmungsgemäß darin angeordnet sind. Eine solche zusätzliche Sicherung kann etwa dadurch verwirklicht sein, daß die Verriegelungseinrichtung einen schwenkbar an der Andockeinrichtung angelenkten Verriegelungsarm aufweist, wobei jedem in die Andockeinrichtung eingesetzten Reduktionsbehälter ein solcher Verriegelungsarm zugeordnet ist. Ferner befinden sich an dem Verriegelungsarm Fortsätze, die bei einer bestimmungsgemäßen Positionierung des dem Verriegelungsarm zugeordneten Reduktionsbehälters in entsprechende Öffnungen oder Ausnehmungen des Reduktionsbehälters eingreifen. Bei Einsatz eines oben beschriebenen Reduktionsbehälters mit einer am Boden befindlichen Handhabe können derartige Öffnungen beispielsweise in den unteren Rand der Handhabe eingebracht sein.

Die Abgasreinigungsanlage kann ausgestaltet sein, um entweder aus einem Reduktionsbehälter NH₃ in seiner gasförmigen oder in seiner flüssigen Phase zu entnehmen. Dabei kann vorgesehen sein, daß sowohl NH₃ in reiner Form in dem Reduktionsmittelbehälter enthalten ist oder auch in einer Mischform oder auch gebunden, aus welcher chemischen Verbindung es thermolytisch abgespalten werden kann. Ist die Abgasreinigungsanlage ausgelegt, um aus dem Reduktionsbehälter NH₃-Gas zu entnehmen, ist es zweckmäßig, der Andockeinrichtung eine Wärmequelle zuzuordnen, die dergestalt konzipiert und angeordnet ist, daß durch die Wärmequelle nur ein Teilbereich eines jeden Reduktionsbehälters bzw. seines Inhaltes erwärmbar ist.

Durch Erwärmen des in dem Behälter befindlichen flüssigen NH₃ steigt entsprechend der Dampfdruck in dem Reduktionsbehälter, so daß auch bei niedrigen Umgebungstemperaturen ein ausreichender Gasdruck bereitgestellt ist, um genügend gasförmiges NH₃ zur Abgasreinigung bereitstellen zu können. Durch die Erwärmung des Inhaltes des Reduktionsbehälters ist es jedoch auch möglich, den Reduktionsbehälter vollständig zu entleeren. Entsprechendes gilt für den Fall, daß mit einem Male eine größere NH₃-Menge aus dem Reduktionsmittelbehälter entnommen wird. Bei der beanspruchten Abgasreinigungsanlage ist die Wärmequelle dergestalt konzipiert und angeordnet, daß durch die Wärmequelle nur ein Teilbereich des Reduktionsbehälters bzw. seines Inhaltes erwärmbar ist, und zwar zweckmäßigerweise ein solcher Teilbereich des Reduktionsbehälters, in dem sich bis zu seiner Entleerung das flüssige NH₃ befindet. Dies ist in aller Regel das Tiefste des Reduktionsbehälters. Die Erwärmung eines Teilbereiches des Reduktionsbehälters ist besonders einfach in seiner Realisierung, da zu diesem Zweck nur eine geringere Wärmemenge benötigt wird und auf besonders geschickte Weise die in dem Reduktionsbehälter bei einer lokalen Erwärmung auftretende Konvektion des flüssigen NH₃ und bei einem lokalen Sieden die durch die Dampfblasenbildung eintretenden Turbulenzen zur Wärmeverteilung innerhalb der in dem Reduktionsbehälter enthaltenen Flüssigkeit ausgenutzt werden. Bei dieser Abgasreinigungsanlage ist es daher nicht notwendig, den gesamten Reduktionsbehälter zu erwärmen. Überdies kann beim Einsatz einer lediglich eine lokale Erwärmung hervorrufenden Wärmequelle ein wesentlich rascher reagierender Regelkreis ausgebildet sein.

Die Wärmequelle kann beispielsweise als Widerstandsheizung oder als PTC-Element an der Oberfläche des Reduktionsbehälters angeordnet sein.

In einer bevorzugten Ausgestaltung einer solchen Abgasreinigungsanlage ist die Wärmequelle jedoch ausgelegt, um berührungslos von außen den Inhalt des Reduktionsbehälters zu erwärmen. Der Vorteil einer solchen bezüglich des Reduktionsbehälters berührungslosen Erwärmung seines Inhaltes liegt darin, daß dann auf einfache Weise der Reduktionsbehälter im Rahmen des beschriebenen Wechselsystems unter Einsatz der Andockeinrichtung nach seiner Entleerung ausgetauscht und durch einen befüllten ersetzt werden kann, ohne daß eine zusätzliche nachträgliche Montage oder Einrichtung der Wärmequelle vorgenommen werden muß. Als berührungslos arbeitende Wärmequelle kann beispielsweise eine solche vorgesehen sein, die eine energiereiche Strahlung emittiert, wobei sich innerhalb der Strahlung der Wärmequelle nur ein Teilbereich des Reduktionsbehälters - die lokale Erwärmungsstelle - befindet. Die Wärmequelle kann beispielsweise ausgelegt sein, um eine IR-Strahlung zu emittieren, wobei es bei einer solchen Ausgestaltung zweckmäßig ist, die lokale Erwärmungsstelle des Reduktionsbehälters besonders strahlungsadsorbtiv, beispielsweise geschwärzt vorzusehen. Als Wärmequelle zum Erwärmen des flüssigen NH₃ kann gemäß einer weiteren Ausgestaltung auch ein Sender zum Emittieren einer Mikrowellenstrahlung als energiereiche Strahlung eingesetzt sein. Selbstverständlich kann ein Teilbereich des Reduktionsbehälters auch durch mehrere einzelne Wärmequellen bestrahlt bzw. wärmebeaufschlagt werden. Um eine Handhabung des Reduktionsmittelbehälters zu erleichtern, wenn dieser erwärmt ist, ist die Handhabe aus einem Material mit nur einer geringen Wärmeleitfähigkeit hergestellt, etwa aus Kunststoff.

Bei Einsatz einer solchen Wärmequelle zum Erwärmen des flüssigen NH₃ in dem Reduktionsbehälter ist es zweckmäßig, die innere Oberfläche des Reduktionsbehälters im Bereich der lokalen Erwärmungsstelle mit Mitteln auszustatten, durch die eine Dampfblasenbildung begünstigt ist, beispielsweise die innere Oberfläche aufzurauhen. Eine Dampfblasenbildung wird wie auch bei Siedesteinen bei einer solchen Oberfläche begünstigt, so daß eine intensive Wärmeverteilung durch die eintretenden Turbulenzen bei der Dampfblasenbildung eintritt.

Bei einer solchen Ausgestaltung ist es ferner zweckmäßig, dem Ausgang des Reduktionsmittelbehälters eine Flüssigkeitsfalle nachzuschalten, so daß bei einem Reduktionsmittelbehälterwechsel austretende Flüssigkeit in der Flüssigkeitsfalle gefangen wird und nicht in das weitere System eindringt. Einer solchen Flüssigkeitsfalle kann ferner eine Heizeinrichtung zugeordnet sein, um das in der Flüssigkeitsfalle aufgefangene NH₃ verdampfen zu können und das NH₃ in seiner gasförmigen Phase der vorgesehenen Abgasreinigung zuzuführen.

Für den Fall, daß die Abgasreinigungsanlage ausgelegt ist, aus dem Reduktionsbehälter NH₃ in seiner flüssigen Phase zu entnehmen, ist es zweckmäßig, daß der Entnahmeeinrichtung in Fließrichtung des NH₃ in die Versorgungsleitung eine Dosiereinrichtung und der Dosiereinrichtung nachgeschaltet ein Verdampfer eingeschaltet sind, bevor die Versorgungsleitung in den Abgasstrang mündet.

Durch diese Maßnahme ist eine Entnahme nicht abhängig von einem bestimmten, in dem Reduktionsbehälter befindlichen Gasdruck, so daß NH₃ zu jedem Zeitpunkt und insbesondere auch bei kalten Umgebungsbedingungen dem Reduktionsbehälter entnommen werden kann. Auch ist bei einer Entnahme von flüssigem NH₃ eine quasi vollständige Entleerung des Reduktionsbehälters möglich. Zu diesem Zweck weist der Reduktionsbehälter eine Entnahmeeinrichtung zum Entnehmen von flüssigem NH₃ auf, die beispielsweise nach Art eines Rüssels ausgebildet sein kann. Ein Eintreten von flüssigem Ammoniak in einen solchen Entnahmerüssel kann durch den in dem Reduktionsbehälter befindlichen Dampfdruck oder auch durch eine Saugeinrichtung realisiert sein.

Der Entnahmeeinrichtung zum Entnehmen von flüssigem NH₃ aus dem Reduktionsbehälter ist in Fließrichtung nachgeschaltet eine Dosiereinrichtung, beispielsweise ein Dosierventil, mit dem die jeweils benötigte NH₃-Menge dem Reduktionsbehälter entnommen wird. Der Dosiereinrichtung nachgeschaltet ist ein Verdampfer zum Verdampfen des durch die Dosiereinrichtung dem Reduktionsbehälter entnommenen NH₃. Dabei kann vorgesehen sein, daß die Dosiereinrichtung getaktet oder kontinuierlich im jeweils benötigten Umfange NH₃ dem Verdampfer zuführt. In dem Verdampfer erfolgt eine Verdampfung des flüssigen NH₃, um NH₃ in gasförmigem Zustand in den Abgasstrang eindüsen zu können.

Beim Gegenstand einer nach diesem Prinzip arbeitenden Abgasreinigungsanlages erfolgt eine Verdampfung des flüssigen NH₃ nur in einer solchen Menge, die auch aktuell im Abgasstrang zum Durchführen der gewünschten Entstickung benötigt wird. Daher ist es grundsätzlich nicht notwendig, den eingesetzten Verdampfer so auszugestalten, daß dieser gleichzeitig als Bevorratungsbehältnis für eine größere gasförmige NH₃-Menge dient, aus der dann die benötigte Menge zum Eindüsen in den Abgasstrang entnommen wird. Folglich sind die notwendigen, an den Verdampfer zu stellenden Sicherheitsanforderungen auf ein Minimum beschränkt.

Zur Erhöhung der Sicherheit der Abgasreinigungsanlage bei einem Ausfall des Verdampfers und bei einer defekten, offenen und nicht mehr verschließbaren Dosiereinrichtung ist gemäß einer Weiterbildung vorgesehen, an den Ausgang des Verdampfers eine Einrichtung zum Be- oder Verhindern des Austritts von flüssigem NH₃ anzuordnen. Eine solche Flüssigkeitssperre kann beispielsweise durch ein Schwimmerventil realisiert sein, welches schließt, sobald am Ausgang des Verdampfers Flüssigkeit ansteht. Zur Behinderung des Austritts von Flüssigkeit aus dem Verdampfer kann jedoch auch ein Filterelement vorgesehen sein, welches zwar gasförmiges NH₃, aber kein oder nur sehr wenig flüssiges NH₃ durchläßt. Zweckmäßig ist es, bei Einsatz eines Schwimmerventils, dieses mit entsprechenden Sensoren oder Schaltern so auszugestalten, daß für eine Steuereinrichtung eine Detektion der Stellung des Schwimmers erfolgen kann. Wird systemseitig erkannt, daß das Schwimmerventil geschlossen ist, welches gleichbedeutend ist, daß am Ausgang des Verdampfers flüssiges NH₃ ansteht, dann kann beispielsweise ein Notventil geschlossen werden, oder der Verdampfer in Betrieb gesetzt werden, um das anstehende flüssige NH₃ in seine gasförmige und somit weniger sicherheitsrelevante Phase zu bringen. Gleichfalls kann eine solche mit Sensoren ausgestattete Sperreinrichtung auch direkt den Verdampfer schalten.

Dem Verdampfer nachgeschaltet ist in einer bevorzugten Weiterbildung ferner eine Luftzufuhreinrichtung, durch die der den Reduktionsbehälter mit dem Abgasstrang verbindenden Versorgungsleitung zusätzliche Luft zugeführt wird, wobei diese zugeführte Luft sowohl im ständigen Betrieb der Abgasreinigungsanlages zur Erhöhung der Transportgeschwindigkeit des in dem Verdampfer hergestellten Gases in den Abgasstrang und/oder zum Spülen der Versorgungsleitung dienen kann. Ein solches Spülen ist insbesondere dann zweckmäßig, wenn zwischen dem Verdampfer bzw. bei Einsatz einer Flüssigkeitssperreinrichtung zwischen der Flüssigkeitssperreinrichtung und dem Abgasstrang eine längere Transportstrecke zum Abgasstrang zurück zu legen ist.

Es ist zweckmäßig, die zur Entnahme von NH₃ notwendigen Aggregate sämtlich in der Andockeinrichtung unter zu bringen, da diese in aller Regel gegenüber äußeren Einflüssen geschützt ist. Zwischen der Andockeinrichtung und dem Abgasstrang befindet sich dann lediglich der letzte Abschnitt der Versorgungsleitung. Eine solche Anordnung ist insbesondere auch zum Nachrüsten vorhandener Brennkraftmaschinen zweckmäßig, da die maßgeblichen Komponenten alle in einem Modul - der Andockeinrichtung - integriert sind und letztendlich nur eine Leitung zum Abgasstrang geführt werden muß.

Nachfolgend ist die Erfindung anhand eines Ausführungsbeispieles unter Bezugnahme auf die beigefügten Figuren beschrieben. Es zeigen:
- **Fig. 1**: ein schematisiertes Blockschaltbild einer Abgasreinigungsanlage zum Zuführen von NH₃ in den Abgasstrang eines Verbrennungsmotors,
- **Fig. 2**: eine schematisierte dreidimensionale Darstellung einer Andockeinrichtung zur Aufnahme von zwei Reduktionsbehältern,
- **Fig. 3**: eine dreidimensionale Darstellung eines Reduktionsbehälters und
- **Fig. 4**: einen Schnitt durch die Andockeinrichtung der Figur 2 mit den beiden darin eingesetzten Reduktionsbehältern.

Ein nicht näher dargestelltes Kraftfahrzeug mit einem Dieselmotor zeigt einen in den Abgasstrang 1 eingesetzten SCR-Katalysator 2. Dem Abgasstrang 1 ist eine Abgasreinigungsanlage 3 zugeordnet, über welches vor dem SCR-Katalysator 2 zum Entsticken der durch die dem Abgasstrang 1 vorgeschaltete Brennkraftmaschine produzierten Abgase als Reduktionsmittel NH₃ zugeführt wird. Die Abgasreinigungsanlage 3 besteht in seinen wesentlichen Komponenten bei dem dargestellten Ausführungsbeispiel aus einem Reduktionsbehälter 4, gefüllt mit flüssigem Ammoniak (NH₃) 5. Der Reduktionsbehälter 4 ist daher druckfest ausgelegt, um dem beim Vergasen des NH₃ entstehenden Dampfdruckes standhalten zu können. Die Abgasreinigungsanlage 3 ist ausgelegt, um aus dem Reduktionsbehälter 4 flüssiges NH₃ zu entnehmen. Zu diesem Zweck ist in dem Reduktionsbehälter 4 ein Entnahmerüssel 6 angeordnet, der sich bis in das Tiefste des Reduktionsbehälter 4 erstreckt. In dem dargestellten Ausführungsbeispiel ist der Reduktionsbehälter 4 liegend vorgesehen; für den Fall, daß der Reduktionsbehälter stehend im Kraftfahrzeug angeordnet ist, erstreckt sich der Entnahmerüssel bis in den Bereich seines Bodens. In nicht näher dargestellter Art und Weise ist der Reduktionsbehälter 4 über ein Kupplungssystem an eine Versorgungsleitung 7 zum Zuführen des gasförmigen Ammoniaks in den Abgasstrang 1 angeschlossen. In die Versorgungsleitung 7 ist ein Dosierventil 8 eingeschaltet, bevor die Versorgungsleitung 7 in den Abgasstrang 1 mündet. Das Dosierventil 8 ist an eine Steuereinrichtung 9 angeschlossen, die beaufschlagt ist mit Kenngrößen, wiedergebend den aktuellen Motorbetriebszustand, so daß sich aus diesen Kenngrößen die zuzuführende NH₃-Menge berechnen läßt.

Dem Dosierventil 8 nachgeschaltet ist ein Verdampfer 10 zum Verdampfen der durch das Dosierventil 8 aus dem Reduktionsbehälter 4 entnommenen NH₃-Menge. Der Verdampfer 10 ist ebenfalls an die Steuereinrichtung 9, beispielsweise einem Motormanagementsystem, angeschlossen, durch die der Verdampfer in seine unterschiedlichen Zustände schaltbar und regelbar ist. Am Ausgang des Verdampfers 10 ist ein Schwimmerventil 11 in die Versorgungsleitung 7 eingeschaltet, durch das eine Flüssigkeitssperre am Ausgang des Verdampfers 10 realisiert ist. Bei Anliegen von NH₃ in seiner flüssigen Form am Ausgang des Verdampfers 10 schließt das Schwimmerventil 11, so daß ein Austreten von flüssigem NH₃ bei geöffnetem Dosierventil 8 und nicht arbeitendem Verdampfer 10 verhindert ist. Das Schwimmerventil 11 ist ebenfalls an die Steuereinrichtung 9 angeschlossen, über die eine Detektion der Stellung des Schwimmers erfolgt, so daß bei Feststellen eines geschlossenen Schwimmerventils 11 durch die Steuereinrichtung 9 entsprechende Aktionen getriggert werden können.

Dem Schwimmerventil 11 nachgeschaltet ist die Mündung einer insgesamt mit dem Bezugszeichen 12 gekennzeichneten Luftzuführeinrichtung, durch die zusätzliche Luft in den verbleibenden Abschnitt der Versorgungsleitung 7 zwischen der Luftzuführeinrichtung 12 und dem Abgasstrang 1 beigemengt wird. Die Luftzuführeinrichtung 12 umfaßt bei dem dargestellten Ausführungsbeispiel ein Taktventil 13 sowie eine Luftquelle 14, die bei Einsatz die Abgasreinigungsanlages 3 in einem Kraftfahrzeug mit Druckluftbremse der Lufttank sein kann. Die zusätzlich zuführbare Luft dient zum einen zum Erhöhen der Transportgeschwindigkeit des durch den Verdampfer 10 vergasten flüssigen NH₃ auf der verbleibenden Strecke zum Abgasstrang 1. Überdies kann durch die zusätzlich zugeführte Luft eine Reinigung bzw. Luftspülung der Versorgungsleitung erfolgen.

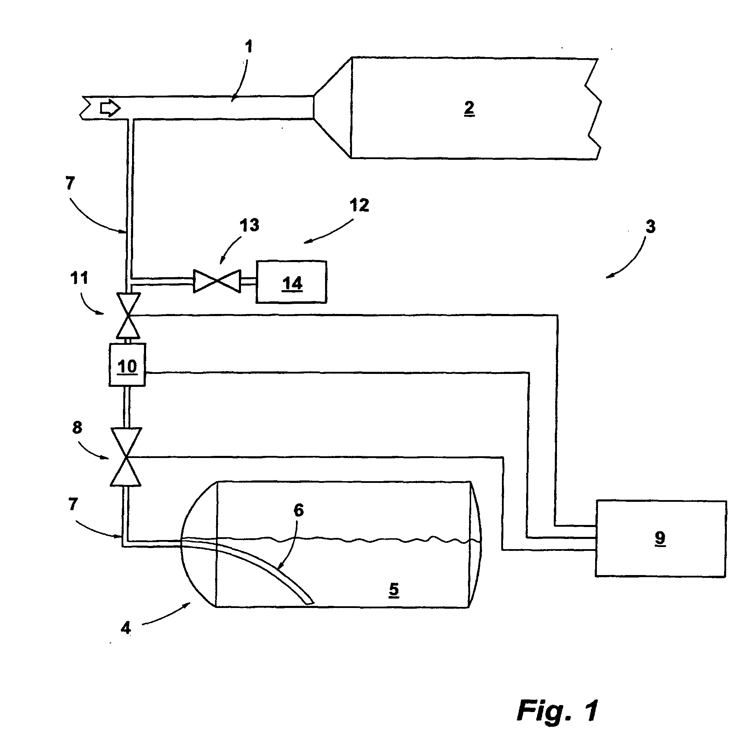

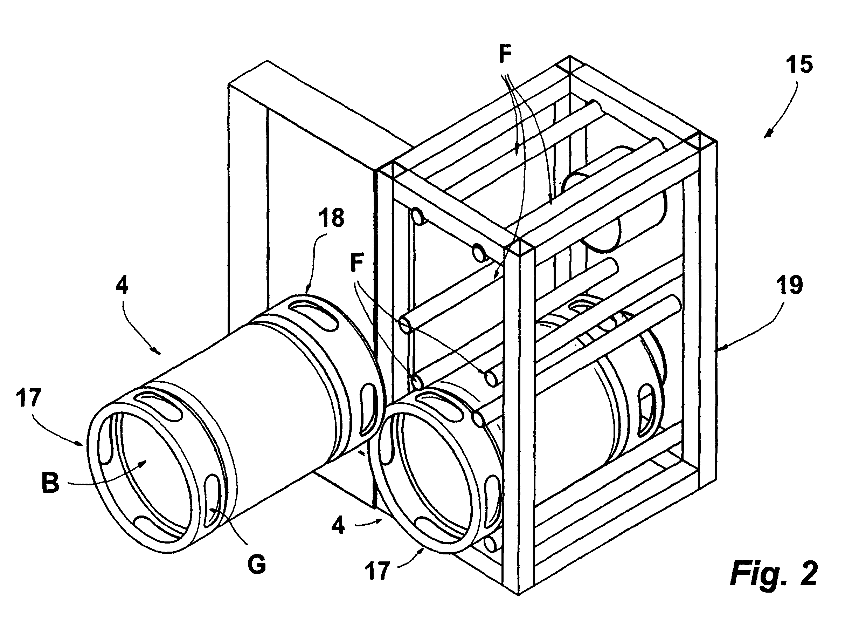

Die Abgasreinigungsanlage 3, welche in Figur 1 lediglich schematisiert nach Art eines Blockschaltbildes gezeigt ist, umfaßt ferner eine in Figur 2 gezeigte Andockeinrichtung 15 zur liegenden Aufnahme von zwei Reduktionsbehältern 4. Die Reduktionsbehälter 4 sind als druckfeste Behälter ausgebildet und weisen eine zylindrische Mantelfläche auf. Die beiden gegenüberliegenden Böden B eines solchen Reduktionsbehälters 4 sind konvex ausgebildet. Um einen solchen Reduktionsbehälter 4 besser handhaben und auch stapeln zu können, sind an beiden Enden Handhaben 17, 18 als Ringelemente angeordnet, in die jeweils Grifföffnungen G eingebracht sind.

Die Andockeinrichtung 15 umfaßt ein Gestell 19, in dem jedem Reduktionsbehälter 4 vier Führungsstangen F zugeordnet sind, die in gleichem Winkelabstand zueinander an der Außenfläche eines Reduktionsbehälters anliegen. Anstatt der in den Figuren gezeigten Führungsstangen können ebenfalls Führungsschienen oder dergleichen vorgesehen sein. Ebenfalls ist es möglich, derartige Führungsmittel vorzusehen, die eine lediglich lagerrichtige Zuführung des Reduktionsmittelbehälters erlauben. Die Führungsstangen F dienen zum Führen und Halten eines eingesetzten Reduktionsbehälters. Der in Figur 2 gezeigte untere Reduktionsbehälter 4 ist bereits in die Andockeinrichtung 15 eingesetzt und mit der Versorgungsleitung in Flüssigkeitsverbindung gestellt worden. Das Gestell 19 ist bezüglich seiner Länge so konzipiert, daß die hintere Handhabe 17 des Reduktionsbehälters 4 aus dem Gestell 19 heraus ragt, so daß eine die Reduktionsbehälter 4 einsetzende bzw. wechselnde Person ohne weiteres die Handhabe 17 ergreifen kann, um den Reduktionsbehälter 4 durch Ausüben einer rotatorischen Bewegung zunächst von der Versorgungsleitung zu trennen und anschließend aus dem Gestell 19 heraus ziehen zu können.

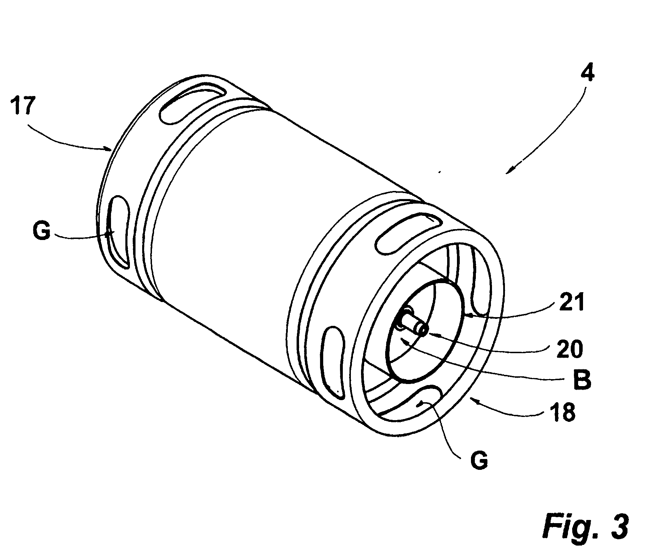

Figur 3 zeigt nochmals einen solchen Reduktionsbehälter 4, jedoch im Unterschied zu der Darstellung der Figur 2 mit Blick auf das Kopfende und den oberen Boden B. In den Boden B ist ein Kupplungsteil 20 zentrisch und von dem Boden B abragend angeordnet, welches mit einem weiteren, der Andockeinrichtung 15 zugeordneten Kupplungsteil verbunden werden kann. Konzentrisch ist das Kupplungsteil 20 von einem Ringkörper 21 umgeben, der, wie weiter unten dargelegt, zur Führung beim Herstellen der Flüssigkeitsverbindung dient.

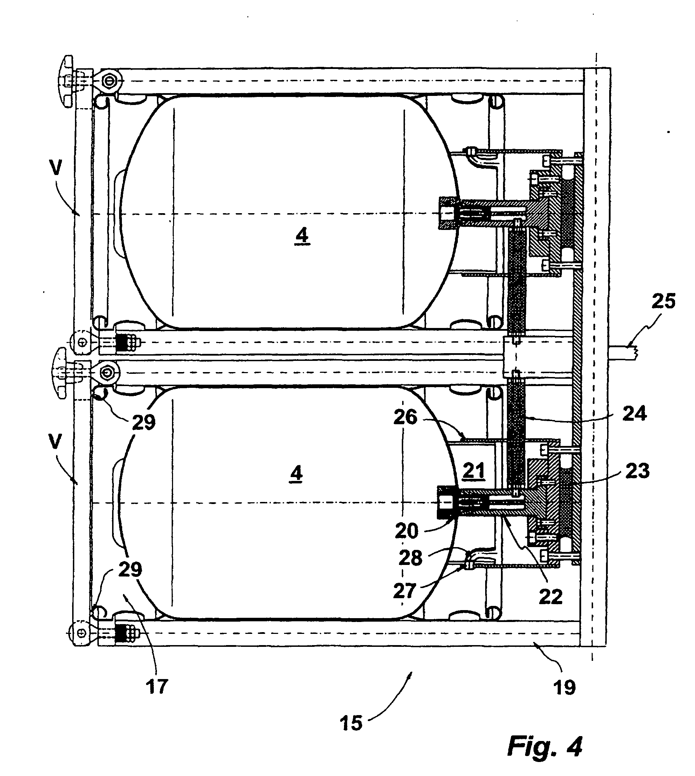

Die beiden in die Andockeinrichtung 15 eingesetzten Reduktionsbehälter 4 sind in der Schnittdarstellung der Figur 4 gezeigt. Beide Reduktionsbehälter 4 sind mit ihrem Kupplungsteil 20 an ein der Andockeinrichtung 15 zugeordnetes zweites Kupplungsteil 22 angeschlossen bzw. mit diesem in Eingriff gestellt. Das zweite Kupplungsteil 22 ist bezüglich des Gestells 19 zum Verhindern des Einbringens von Spannungen durch evtl. Vibrationen des Reduktionsbehälters 4 in die Versorgungsleitung 7 und darin eingeschaltete Aggregate schwimmend an dem Gestell 19 angeordnet. Zu diesem Zweck erfolgt die rückwärtige Befestigung über ein Gummibett 23; die Flüssigkeitsverbindung mit der eigentlichen Versorgungsleitung erfolgt über einen Schlauch 24 oder beispielsweise über eine Rohrwendel. In der Andockeinrichtung 15 sind ferner die zur Entnahme notwendigen Aggregate, das Dosierventil 8, der Verdampfer 10 und das Schwimmerventil 11 sowie das Taktventil 13 der Luftzuführeinrichtung 12 angeordnet. Diese Aggregate sind in Figur 4 der Übersicht halber nicht dargestellt. Die Andockeinrichtung 15 weist einen NH₃-Abgang 25 als Teil der Versorgungsleitung 7 auf, die in den Abgasstrang 1 mündet.

Zum geführten Herstellen der Flüssigkeitsverbindung zwischen einem Reduktionsbehälter 4 und dem an dem Gestell 19 befestigten zweiten Kupplungsteil 22 dient der Ringkörper 21 als Führung, der in einen dem zweiten Kupplungsteil 22 zugeordneten zweiten Ringkörper 26 eingreift. Dieser zweite Ringkörper 26 trägt Führungszapfen 27, von denen in der Figur lediglich einer dargestellt ist. Die Führungszapfen 27 greifen jeweils in eine dem Ringkörper 21 des Reduktionsbehälters 4 eingebrachte Bajonettnut 28 ein. Nach In-Eingriff-Stellen der beiden Ringkörper 21, 26 und des Führungszapfens 27 in die Bajonettnut 28 können durch Ausüben eines Drehmomentes auf die hintere Handhabe 17 eines Reduktionsbehälters 4 die beiden Kupplungsteile 20, 22 in Flüssigkeitsverbindung miteinander gebracht werden.

Im Bereich des einsteckseitigen Endes des Gestells 19 sind an diesem zwei Verriegelungsarme V schwenkbar an dem Gestell 19 angelenkt. Die Verriegelungsarme V dienen zum Sichern der in die Andockeinrichtung 15 eingesetzten Reduktionsbehälter 4. Mit Hilfe der Verriegelungsarme V erfolgt ebenfalls eine Kontrolle, ob die Reduktionsbehälter 4 sich in ihrer bestimmungsgemäßen Position innerhalb des Gestells 19 befinden. Zu diesem Zweck tragen die Verriegelungsarme V an ihrer zu einem Reduktionsbehälter 4 gewandten Seite Nasen 29, die dann in entsprechende Öffnungen des umbördelten unteren Randes der Handhabe 17 eingreifen, wenn sich der Reduktionsbehälter 4 in seiner bestimmungsgemäßen Position befindet. Ansonsten ist ein Einschwenken der Verriegelungsarme V zum Sichern der Reduktionsbehälter 4 nicht möglich.

### Bezugszeichenliste

- 1: Abgasstrang
- 2: SCR-Katalysator
- 3: Abgasreinigungsanlage
- 4: Reduktionsbehälter
- 5: flüssiges NH₃
- 6: Entnahmerüssel
- 7: Versorgungsleitung
- 8: Dosierventil
- 9: Steuereinrichtung
- 10: Verdampfer
- 11: Schwimmerventil
- 12: Luftzuführeinrichtung
- 13: Taktventil
- 14: Lufttank
- 15: Andockeinrichtung
- 17: Handhabe
- 18: Handhabe
- 19: Gestell
- 20: Kupplungsteil
- 21: Ringkörper
- 22: Kupplungsteil
- 23: Gummibett
- 24: Schlauch
- 25: NH₃-Abgang
- 26: Ringkörper
- 27: Führungszapfen
- 28: Bajonettnut
- 29: Nase

- B: Boden
- F: Führungsstange
- G: Grifföffnung
- V: Verriegelungsarm

## Patentansprüche

1. Abgasreinigungsanlage zum Reinigen von Abgasen einer Brennkraftmaschine an einem SCR-Katalysator (2) unter Verwendung von zusätzlich in den Abgasstrom vor dem SCR-Katalysator (2) eingebrachtem Reduktionsmittel welches NH₃ in reiner oder in gebundener Form enthält, umfassend zumindest einen Reduktionsmittelbehälter (4), in dem das dem Abgasstrom zuzuführende Reduktionsmittel bevorratet ist und der über eine Versorgungsleitung (7) mit dem Abgasstrang (1) verbunden ist,
**dadurch gekennzeichnet, dass**
der zumindest eine Reduktionsmittelbehälter (4) in einer Andockeinrichtung (15) als Teil der Abgasreinigungsanlage (3) gehalten und über eine Kupplung (20, 22) mit der Versorgungsleitung (7) verbunden ist, wobei von der Kupplung (20, 22) das eine Kupplungsteil (22) der Andockeinrichtung (15) und das andere Kupplungsteil (20) dem Reduktionsmittelbehälter (4) zugeordnet ist und beide Kupplungsteile (20, 22) über eine axiale gegeneinander gerichtete Bewegung miteinander in Eingriff stellbar sind, und die Andockeinrichtung (15) und der zumindest eine Reduktionsmittelbehälter (4) zusammenwirkende Führungsmittel (21, 26, 27, 28) aufweisen, durch die der zumindest eine Reduktionsmittelbehälter (4) geführt in seine bestimmungsgemäße Position zum Zusammenführen der beiden Kupplungsteile (20, 22) bringbar ist, wobei die Andockeinrichtung (15) Führungsstangen (F) umfasst, auf denen der zumindest eine Reduktionsmittelbehälter (4) in seine bestimmungsgemäße Stellung bringbar ist und auf denen der Reduktionsmittelbehälter (4) aufliegt.

2. Abgasreinigungsanlage nach Anspruch 1,
**dadurch gekennzeichnet, dass**
das der Andockeinrichtung (15) zugeordnete Kupplungsteil (22) spannungsentkoppelt an der Andockeinrichtung (15) befestigt ist.

3. Abgasreinigungsanlage nach Anspruch 1 oder 2,
**dadurch gekennzeichnet, dass**
die Führungsmittel (21, 26, 27, 28) ausgelegt sind, dass zum In-Eingriff-Stellen der beiden Kupplungsteile (20, 22) miteinander neben der axial, gegeneinander gerichteten Bewegung der beiden Kupplungsteile (20, 22) ebenfalls eine rotatorische Bewegung der beiden Kupplungsteile (20, 22) gegeneinander ausübbar ist.

4. Abgasreinigungsanlage nach Anspruch 3,
**dadurch gekennzeichnet, dass**
die Führungsmittel (21, 26, 27, 28) nach Art einer Bajonettverriegelung ausgebildet sind, wobei dem Reduktionsmittelbehälter (4) ein das dem Reduktionsmittelbehälter (4) zugeordnete Kupplungsteil (20) konzentrisch umgebender Ringkörper (21) mit zumindest einer Bajonettnut (28) und der Andockeinrichtung (15) ein das der Andockeinrichtung (15) zugeordnete Kupplungsteil (22) konzentrisch umgebender Ringkörper (26) mit einer der Anzahl der Bajonettnuten (28) entsprechenden Anzahl an Führungszapfen (27) zugeordnet sind.

5. Abgasreinigungsanlage nach einem der Ansprüche 1 bis 4,
**dadurch gekennzeichnet, dass**
der zumindest eine Reduktionsmittelbehälter (4) eine zylindrische Mantelfläche aufweist und das eine Kupplungsteil (20) an dem Kopfende des Behälters (4) angeordnet ist, während an dem Fußende eine Handhabe (17) zum Handhaben des Reduktionsmittelbehälters (4) beim Einführen in die Andockeinrichtung (15) und beim In-Eingriff-Stellen der beiden Kupplungsteile (20, 22) angeordnet ist.

6. Abgasreinigungsanlage nach Anspruch 5,
**dadurch gekennzeichnet, dass**
die Handhabe (17) ein den Boden (B) des Reduktionsmittelbehälters (4) umgebender Ring mit darin eingebrachten Grifföffnungen (G) ist.

7. Abgasreinigungsanlage nach einem der Ansprüche 1 bis 6,
**dadurch gekennzeichnet, dass**
der zumindest eine Reduktionsmittelbehälter (4) durch vier Führungsstangen (F) geführt ist.

8. Abgasreinigungsanlage nach einem der Ansprüche 1 bis 7,
**dadurch gekennzeichnet, dass**
das die Andockeinrichtung (15) eine jedem Reduktionsmittelbehälter (4) zugeordnete Verriegelungseinrichtung (V) aufweist, mit der der in die Andockeinrichtung (15) eingesetzte Reduktionsmittelbehälter (4) gesichert gehalten ist.

9. Abgasreinigungsanlage nach Anspruch 8,
**dadurch gekennzeichnet, dass**
die Verriegelungseinrichtung (V) Mittel (29) umfasst, die formschlüssig in dem Reduktionsmittelbehälter (4) zugeordnete Öffnungen eingreifen, um eine Verriegelung der Verriegelungseinrichtung (V) nur dann zu gestatten, wenn der einer Verriegelungseinrichtung (V) zugeordnete Reduktionsmittelbehälter (4) sich in seiner bestimmungsgemäßen Position befindet.

10. Abgasreinigungsanlage nach Anspruch 8 oder 9,
**dadurch gekennzeichnet, dass**
als Verriegelungseinrichtung ein schwenkbar an der Andockeinrichtung (15) angelenkter Verriegelungsarm dient.

11. Abgasreinigungsanlage nach einem der Ansprüche 1 bis 10,
**dadurch gekennzeichnet, dass**
das die Abgasreinigungsanlage ausgelegt ist, um NH₃ in seiner gasförmigen Phase aus dem Reduktionsmittelbehälter (4) zu entnehmen und dass dem Reduktionsmittelbehälter (4) eine Wärmequelle zugeordnet ist und diese Wärmequelle dergestalt konzipiert und angeordnet ist, dass durch die Wärmequelle nur ein Teilbereich des Reduktionsmittelbehälters (4) bzw. seines Inhalts durch die Wärmequelle erwärmbar ist.

12. Abgasreinigungsanlage nach Anspruch 11,
**dadurch gekennzeichnet, dass**
die Wärmequelle ausgelegt ist, um berührungslos den Inhalt des Reduktionsmittelbehälters (4) zu erwärmen.

13. Abgasreinigungsanlage nach Anspruch 12,
**dadurch gekennzeichnet, dass**
dem Reduktionsmittelbehälters (4) eine Wärmequelle zum Abgeben einer energiereichen Strahlung zugeordnet ist, die dergestalt konzipiert und angeordnet ist, dass nur ein Teilbereich des Reduktionsmittelbehälters (4) sich in der von der Wärmequelle emittierten Strahlung befindet.

14. Abgasreinigungsanlage nach Anspruch 13,
**dadurch gekennzeichnet, dass**
die Wärmequelle zum Emittieren einer IR-Strahlung als energiereiche Strahlung ausgelegt ist.

15. Abgasreinigungsanlage nach Anspruch 13,
**dadurch gekennzeichnet, dass**
die Wärmequelle als Sender zum Emittieren einer Mikrowellen-Strahlung als energiereiche Strahlung ausgelegt ist.

16. Abgasreinigungsanlage nach einem der Ansprüche 11 bis 15,
**dadurch gekennzeichnet, dass**
der durch die Wärmequelle erwärmte Bereich des Reduktionsmittelbehälters (4) bzw. seines Inhaltes im Bereich seines Tiefsten angeordnet ist.

17. Abgasreinigungsanlage nach einem der Ansprüche 1 bis 10,
**dadurch gekennzeichnet, dass**
die Abgasreinigungsanlage (3) ausgelegt ist, um NH₃ in seiner flüssigen Phase aus dem Reduktionsmittelbehälter (4) zu entnehmen und dass dem Reduktionsmittelbehälter (4) eine Entnahmeeinrichtung (6) zum Entnehmen von flüssigem NH₃ (5) zugeordnet ist und der Entnahmeeinrichtung (6) in Fließrichtung des NH₃ in die Versorgungsleitung (7) eine Dosiereinrichtung (8) und der Dosiereinrichtung (8) nachgeschaltet ein Verdampfer (10) eingeschaltet sind, welche beiden Elemente Teil der Andockeinrichtung (15) sind bevor die Versorgungsleitung (7) in den Abgasstrang (1) mündet.

18. Abgasreinigungsanlage nach Anspruch 17,
**dadurch gekennzeichnet, dass**
die Dosiereinrichtung als Dosierventil (8) ausgebildet ist.

19. Abgasreinigungsanlage nach Anspruch 17 oder 18,
**dadurch gekennzeichnet, dass**
am Ausgang des Verdampfers (10) eine Einrichtung (11) zum Be- oder Verhindern des Austritts von flüssigem NH₃ aus dem Verdampfer (10) angeordnet ist.

20. Abgasreinigungsanlage nach Anspruch 19,
**dadurch gekennzeichnet, dass**
als Einrichtung (11) zum Be- oder Verhindern des Austritts von flüssigem NH₃ aus dem Verdampfer (10) ein Schwimmerventil (11) eingesetzt ist.

21. Abgasreinigungsanlage nach Anspruch 19,
**dadurch gekennzeichnet, dass**
an das Schwimmerventil (11) ein Sensor zum Detektieren der Stellung des Schwimmers angeschlossen ist.

22. Abgasreinigungsanlage nach einem der Ansprüche 17 bis 21,
**dadurch gekennzeichnet, dass**
dem Verdampfer (10) eine Luftzufuhreinrichtung (12) zum Zuführen von Luft in die Versorgungsleitung (7) nachgeschaltet ist.

23. Vorrichtung zum Halten und Anschließen eines Reduktionsmittelbehälters (4) im Rahmen eines Wechselbehältersystems an eine Abgasreinigungsanlage (3),
**dadurch gekennzeichnet, dass**
die Vorrichtung als Andockeinrichtung (15) ausgebildet ist und über eine Kupplungseinrichtung verfügt, wobei von der Kupplungseinrichtung das eine Kupplungsteil (22) der Andockeinrichtung (15) und das andere Kupplungsteil (20) dem in der Andockeinrichtung (15) gehaltenen Reduktionsmittelbehälter (4) zugeordnet ist, wobei beide Kupplungsteile (20, 22) über eine axiale gegeneinander gerichtete Bewegung miteinander in Eingriff stellbar sind, und die Andockeinrichtung (15) und der zumindest eine Reduktionsmittelbehälter (4) zusammenwirkende Führungsmittel (21, 26, 27, 28) aufweisen, durch die der zumindest eine Reduktionsmittelbehälter (4) geführt in seine bestimmungsgemäße Position zum Zusammenführen der beiden Kupplungsteile (20, 22) bringbar ist, wobei die Andockeinrichtung (15) Führungsstangen (F) umfasst, auf denen der zumindest eine Reduktionsmittelbehälter (4) in seine bestimmungsmäßige Stellung bringbar ist und auf denen der Reduktionsmittelbehälter (4) aufliegt.

24. Behälter für Reduktionsmittel welches NH₃ in reiner oder in gebundener Form enthält zum Einsatz in einer Abgasreinigungsanlage (3) nach einem der Ansprüche 1 bis 22,
**dadurch gekennzeichnet, dass**
der Behälter (4) eine zylindrische Mantelfläche aufweist und das eine Kupplungsteil (20) an dem Kopfende des Behälters (4) angeordnet ist, während an dem Fußende eine Handhabe (17) zum Handhaben des Behälters (4) beim Einführen in die Andockeinrichtung (15) und beim In-Eingriff-Stellen der beiden Kupplungsteile (20, 22) angeordnet ist.

25. Behälter nach Anspruch 24,
**dadurch gekennzeichnet, dass**
die Handhabe (17) ein den Boden (B) des Behälters (4) umgebender Ring mit darin eingebrachten Grifföffnungen (G) ist.

26. Behälter nach einem der Ansprüche 24 oder 25,
**dadurch gekennzeichnet, dass**
die äußere Oberfläche im Bereich einer durch eine Wärmequelle erwärmten lokalen Erwärmungsstelle des Behälters (4) geschwärzt ist.

27. Behälter nach einem der Ansprüche 24 bis 26,
**dadurch gekennzeichnet, dass**
die innere Oberfläche im Bereich einer durch eine Wärmequelle erwärmten lokalen Erwärmungsstelle des Behälters (4) mit Mitteln ausgestattet ist, durch die eine Dampfblasenbildung begünstigt ist.

28. Behälter nach Anspruch 27,
**dadurch gekennzeichnet, dass**
die innere Oberfläche im Bereich der erwärmten lokalen Erwärmungsstelle des Behälters (4) aufgerauht ist.

29. Behälter nach Anspruch 27,
**dadurch gekennzeichnet, dass**
die Handhaben aus einem Material geringer Wärmeleitfähigkeit, beispielsweise aus Kunststoff hergestellt sind.

## Claims

1. An exhaust emission control system for purifying exhaust gases from an internal combustion engine with an SCR catalytic converter (2) using reducing agent added to the exhaust gas flow upstream of the SCR catalytic converter (2) which contains NH₃ in pure or bound form, comprising at least one reducing agent reservoir (4) in which the reducing agent to be delivered into the exhaust gas flow is stored and which is connected to the exhaust train (1) via a supply line (7),
**characterised in that**
the at least one reducing agent reservoir (4) is held in a docking device (15) as part of the exhaust emission control system (3) and is connected to the supply line (7) via a coupling (20, 22), one part (22) of the coupling (20, 22) being assigned to the docking device (15) and the other part (20) of the coupling (20, 22) being assigned to the reducing agent reservoir (4) and it being possible to engage the two coupling parts (20, 22) with one another by means of axial movements in opposite directions, and the docking device (15) and the at least one reducing agent reservoir (4) have co-operating guide means (21, 26, 27, 28) by means of which the at least one reducing agent reservoir (4) can be guided into its reference position in order to bring the two coupling parts (20, 22) together, the docking device (15) comprising guide rods (F) on which the at least one reducing agent reservoir (4) can be brought into its reference position and on which the reducing agent reservoir (4) lies.

2. An exhaust emission control system in accordance with claim 1,
**characterised in that**
the coupling part (22) assigned to the docking device (15) is fixed to the docking device (15).

3. An exhaust emission control system in accordance with claim 1 or 2,
**characterised in that**
the guide means (21, 26, 27, 28) are designed such that in order to engage the two coupling parts (20, 22) with one another, in addition to the axial movements of the two coupling parts (20, 22) in opposite directions, the two coupling parts (20, 22) can also be moved in a rotational movement in relation to one another.

4. An exhaust emission control system in accordance with claim 3,
**characterised in that**
the guide means (21, 26, 27, 28) are designed in the manner of a bayonet lock, an annular body (21) with at least one bayonet groove (28) which concentrically surrounds the coupling part (20) assigned to the reducing agent reservoir (4) being assigned to the reducing agent reservoir (4) and an annular body (26) with a number of guide pins (27) corresponding to the number of bayonet grooves (28) which concentrically surrounds the coupling part (22) assigned to the docking device (15) being assigned to the docking device (15).

5. An exhaust emission control system in accordance with one of claims 1 to 4,
**characterised in that**
the at least one reducing agent reservoir (4) has a cylindrical surface area and one coupling part (20) is positioned at the head of the reservoir (3), while positioned at the foot is a handle (17) for holding the reducing agent reservoir (4) as it is inserted into the docking device (15) and the two coupling parts (20, 22) are engaged with one another.

6. An exhaust emission control system in accordance with claim 5,
**characterised in that**
the handle (17) is a ring surrounding the base (B) of the reducing agent reservoir (4) in which grip openings (G) are made.

7. An exhaust emission control system in accordance with one of claims 1 to 6,
**characterised in that**
the at least one reducing agent reservoir (4) is guided by four guide rods (F).

8. An exhaust emission control system in accordance with one of claims 1 to 7,
**characterised in that**
the docking device (15) has a locking device (V) assigned to each reducing agent reservoir (4) by means of which the reducing agent reservoir (4) inserted into the docking device (15) is held securely.

9. An exhaust emission control system in accordance with claim 8,
**characterised in that**
the locking device (V) comprises means (29) which engage positively in openings assigned to the reducing agent reservoir (4) in order to permit the locking of the locking device (V) only when the reducing agent reservoir (4) assigned to a locking device (V) is located in its reference position.

10. An exhaust emission control system in accordance with claim 8 or 9,
**characterised in that**
a locking arm which is connected to the docking device (15) in such a manner that it is able to pivot serves as the locking device.

11. An exhaust emission control system in accordance with one of claims 1 to 10,
**characterised in that**
the exhaust emission control system is designed to remove NH₃ in its gaseous phase from the reducing agent reservoir (4) and a heat source is assigned to the reducing agent reservoir (4) and this heat source is designed and positioned in such a manner that it is able to heat only part of the reducing agent reservoir (4) and its contents.

12. An exhaust emission control system in accordance with claim 11,
**characterised in that**
the heat source is designed to heat the contents of the reducing agent reservoir (4) without touching it.

13. An exhaust emission control system in accordance with claim 12,
**characterised in that**
assigned to the reducing agent reservoir (4) is a heat source for emitting high-energy radiation which is designed and positioned in such a manner that only part of the reducing agent reservoir (4) is located in the radiation emitted by the heat source.

14. An exhaust emission control system in accordance with claim 13,
**characterised in that**
the heat source for emitting IR radiation is designed as high-energy radiation.

15. An exhaust emission control system in accordance with claim 13,
**characterised in that**
the heat source is designed as a transmitter for emitting microwave radiation as high-energy radiation.

16. An exhaust emission control system in accordance with one of claims 11 to 15,
**characterised in that**
the area of the reducing agent reservoir (4) and its contents heated by the heat source is positioned in its deepest area.

17. An exhaust emission control system in accordance with one of claims 1 to 10,
**characterised in that**
the exhaust emission control system (3) is designed to remove NH₃ in its liquid phase from the reducing agent reservoir (4), a removal device (6) for removing liquid NH₃ (5) is assigned to the reducing agent reservoir (4) and a metering device (8) is fitted in the supply line (7) downstream of the removal device (6) in the direction of flow of the NH₃ and an evaporator (10) is connected downstream of the metering device (8), these two elements forming part of the docking device (15) before the supply line (7) opens into the exhaust train (1).

18. An exhaust emission control system in accordance with claim 17,
**characterised in that**
the metering device is designed as a metering valve (8).

19. An exhaust emission control system in accordance with claim 17 or 18,
**characterised in that**
positioned at the output of the evaporator (10) is a device (11) for impeding or preventing the emergence of liquid NH₃ from the evaporator (10).

20. An exhaust emission control system in accordance with claim 19,
**characterised in that**
a float valve (11) is used as the device (11) for impeding or preventing the emergence of liquid NH₃ from the evaporator (10).

21. An exhaust emission control system in accordance with claim 19,
**characterised in that**
connected to the float valve (11) is a sensor for detecting the position of the float.

22. An exhaust emission control system in accordance with claims 17 to 21,
**characterised in that**
connected downstream of the evaporator (10) is an air delivery device (12) to deliver air to the supply line (7).

23. A device for holding and connecting a reducing agent reservoir (4) to an exhaust emission control system (3) as part of a replacement reservoir system,
**characterised in that**
the device is designed as a docking device (15) and has a coupling device, one part (22) of the coupling (20, 22) being assigned to the docking device (15) and the other part (20) of the coupling (20, 22) being assigned to the reducing agent reservoir (4) held in the docking device (15), it being possible to engage the two coupling parts (20, 22) with one another by means of axial movements in opposite directions, and the docking device (15) and the at least one reducing agent reservoir (4) have co-operating guide means (21, 26, 27, 28) by means of which the at least one reducing agent reservoir (4) can be guided into its reference position in order to bring the two coupling parts (20, 22) together, the docking device (15) comprising guide rods (F) on which the at least one reducing agent reservoir (4) can be brought into its reference position and on which the reducing agent reservoir (4) lies.

24. A reservoir for reducing agent which contains NH₃ in pure or bound form for use in an exhaust emission control system (3) in accordance with one of claims 1 to 22,
**characterised in that**
the reservoir (4) has a cylindrical surface area and a coupling part (20) is positioned on the head of the reservoir (4), while a handle (17) for holding the reservoir (4) as it is inserted into the docking device (15) and when engaging the two coupling parts (20, 22) is positioned at the foot.

25. A reservoir in accordance with claim 24,
**characterised in that**
the handle (17) is a ring which surrounds the base (B) of the reservoir (4) in which grip openings (G) are made.

26. A reservoir in accordance with one of claims 24 or 25,
**characterised in that**
the outer surface in the area of a local heating point of the reservoir (4) heated by a heat source is blackened.

27. A reservoir in accordance with one of claims 24 to 26,
**characterised in that**
the inner surface in the area of a local heating point of the reservoir (4) heated by a heat source is equipped with means which favour the formation of vapour bubbles.

28. A reservoir in accordance with claim 27,
**characterised in that**
the inner surface in the area of the heated local heating point of the reservoir (4) is roughened.

29. A reservoir in accordance with claim 27,
**characterised in that**
the handles are made of a material of low heat conductivity such as plastic, for example.

## Revendications

1. Installation de purification des gaz d'échappement d'un moteur à combustion interne dans un catalyseur SCR (2), avec utilisation d'un agent réducteur introduit en plus dans le courant des gaz d'échappement devant le catalyseur SCR (2) qui contient du NH₃ sous forme pure ou liée, comprenant au moins un réservoir d'agent réducteur (4) dans lequel est stocké l'agent réducteur à introduire dans le courant des gaz d'échappement et qui est relié à la tuyauterie des gaz d'échappement (1) par l'intermédiaire d'une conduite d'alimentation (7),
**caractérisée en ce que**
le au moins un réservoir d'agent réducteur (4) est placé dans un dispositif d'amarrage (15) comme composant de l'installation de purification des gaz d'échappement (3) et est relié à la conduite d'alimentation (7) par l'intermédiaire d'un accouplement (20, 22), une partie d'accouplement (22) de l'accouplement (20, 22) étant associée au dispositif d'amarrage (15) et l'autre partie d'accouplement (20) au réservoir d'agent réducteur (4) et les deux parties d'accouplement (20, 22) pouvant être mises en prise l'une avec l'autre à l'aide d'un déplacement axial dirigé à l'opposé l'une de l'autre et le dispositif d'amarrage (15) et le au moins un réservoir d'agent réducteur (4) comportant des moyens de guidage concourants (21, 26, 27, 28) grâce auxquels le au moins un réservoir d'agent réducteur (4) peut être amené, guidé, dans sa position déterminée pour la jonction des deux parties d'accouplement (20, 22), le dispositif d'amarrage (15) comprenant des tiges de guidages (F) sur lesquelles le au moins un réservoir d'agent réducteur (4) peut être amené dans sa position déterminée et sur lesquelles s'appuie le réservoir d'agent réducteur (4).

2. Installation de purification des gaz d'échappement selon la revendication 1,
**caractérisée en ce que**
la partie d'accouplement (22) associée au dispositif d'amarrage (15) est fixée au dispositif d'amarrage (15) avec découplage de tension.

3. Installation de purification des gaz d'échappement selon la revendication 1 ou 2,
**caractérisée en ce que**
les moyens de guidage (21, 26, 27, 28) sont conçus de manière à ce que, pour mettre les deux parties d'accouplement (20, 22) en prise l'une avec l'autre, on peut réaliser en plus du déplacement axial dirigé à l'opposé l'une de l'autre, également un déplacement rotatif des deux parties d'accouplement (20, 22) l'une par rapport à l'autre.

4. Installation de purification des gaz d'échappement selon la revendication 3,
**caractérisée en ce que**
les moyens de guidage (21, 26, 27, 28) sont configurés à la manière d'un verrouillage à baïonnette, dans lequel un corps annulaire (21) entourant concentriquement la partie d'accouplement (20) associée au réservoir d'agent réducteur (4) avec au moins une rainure à baïonnette (28) est associé au réservoir d'agent réducteur (4) et un corps annulaire (26) entourant concentriquement la partie d'accouplement (22) associée au dispositif d'amarrage (15) avec un nombre de tourillons de guidage (27) correspondant au nombre de rainures à baïonnette (28) est associé au dispositif d'amarrage (15).

5. Installation de purification des gaz d'échappement selon l'une quelconque des revendications 1 à 4,
**caractérisée en ce que**
le au moins un réservoir d'agent réducteur (4) comporte une surface d'enveloppe cylindrique et la partie d'accouplement (20) est disposée au sommet du réservoir (4), une prise (17) étant disposée au pied pour la manipulation du réservoir d'agent réducteur (4) lors de l'introduction dans le dispositif d'amarrage (15) et de la mise en prise des deux parties d'accouplement (20, 22) l'une avec l'autre.

6. Installation de purification des gaz d'échappement selon la revendication 5,
**caractérisée en ce que**
la prise (17) est un anneau entourant le fond (B) du réservoir d'agent réducteur (4) avec des ouvertures de prise (G) ménagées dedans.

7. Installation de purification des gaz d'échappement selon l'une quelconque des revendications 1 à 6,
**caractérisée en ce que**
le au moins un réservoir d'agent réducteur (4) est guidé par quatre tiges de guidage (F).

8. Installation de purification des gaz d'échappement selon l'une quelconque des revendications 1 à 7,
**caractérisée en ce que**
le dispositif d'amarrage (15) comporte un dispositif de verrouillage (V) associé à chaque réservoir d'agent réducteur (4), avec lequel le réservoir d'agent réducteur (4) inséré dans le dispositif d'amarrage (15) est bloqué.

9. Installation de purification des gaz d'échappement selon la revendication 8,
**caractérisée en ce que**
le dispositif de verrouillage (V) comprend des moyens (29) qui viennent en prise par engagement positif dans des ouvertures prévues dans le réservoir d'agent réducteur (4) pour permettre un verrouillage du dispositif de verrouillage (V) seulement lorsque le réservoir d'agent réducteur (4) associé à un dispositif de verrouillage (V) se trouve dans sa position déterminée.

10. Installation de purification des gaz d'échappement selon la revendication 8 ou 9,
**caractérisée en ce que**
un bras de verrouillage articulé de manière pivotante sur le dispositif d'amarrage (15) sert de dispositif de verrouillage.

11. Installation de purification des gaz d'échappement selon l'une quelconque des revendications 1 à 10,
**caractérisée en ce que**
l'installation de purification des gaz d'échappement est conçue pour extraire le NH₃ dans sa phase gazeuse hors du réservoir d'agent réducteur (4) et **en ce qu'**une source de chaleur est associée au réservoir d'agent réducteur (4) et cette source de chaleur est conçue et disposée de telle manière que seule une zone partielle du réservoir d'agent réducteur (4) ou de son contenu peut être réchauffée par la source de chaleur.

12. Installation de purification des gaz d'échappement selon la revendication 11,
**caractérisée en ce que**
la source de chaleur est conçue pour réchauffer le contenu du réservoir d'agent réducteur (4) dans contact.

13. Installation de purification des gaz d'échappement selon la revendication 12,
**caractérisée en ce que**
une source de chaleur est associée au réservoir d'agent réducteur (4) pour dégager un rayonnement de haute énergie, laquelle source d'énergie est conçue et disposée de telle manière que seule une zone partielle du réservoir d'agent réducteur (4) se trouve dans le rayonnement émis par la source de chaleur.

14. Installation de purification des gaz d'échappement selon la revendication 13,
**caractérisée en ce que**
la source de chaleur pour l'émission d'un rayonnement IR est conçue comme rayonnement de haute énergie.

15. Installation de purification des gaz d'échappement selon la revendication 13,
**caractérisée en ce que**
la source de chaleur est conçue comme émetteur pour l'émission d'un rayonnement de micro-ondes comme rayonnement de haute énergie.

16. Installation de purification des gaz d'échappement selon l'une quelconque des revendications 11 à 15,
**caractérisée en ce que**
la zone du réservoir d'agent réducteur (4) ou de son contenu réchauffée par la source de chaleur est disposée dans sa partie de fond.

17. Installation de purification des gaz d'échappement selon l'une quelconque des revendications 1 à 10,
**caractérisée en ce que**
l'installation de purification des gaz d'échappement (3) est conçue pour extraire le NH₃ dans sa phase liquide hors du réservoir d'agent réducteur (4) et **en ce qu'**un dispositif d'extraction (6) est associée au réservoir d'agent réducteur (4) pour l'extraction du NH₃ liquide (5) et **en ce qu'**un dispositif de dosage (8) est connecté au dispositif d'extraction (6) dans le conduit d'alimentation (7) dans le sens d'écoulement du NH₃ et **en ce qu'**un vaporisateur (10) est monté en aval du dispositif de dosage (8), ces deux éléments faisant partie du dispositif d'amarrage (15) avant que le conduit d'alimentation (7) débouche dans la tuyauterie des gaz d'échappement (1).

18. Installation de purification des gaz d'échappement selon la revendication 17,
**caractérisée en ce que**
le dispositif de dosage est conçu comme une soupape de dosage (8).

19. Installation de purification des gaz d'échappement selon la revendication 17 ou 18,
**caractérisée en ce que**
à la sortie du vaporisateur (10) est disposé un dispositif (11) pour gêner ou empêcher la sortie de NH₃ liquide hors du vaporisateur (10).

20. Installation de purification des gaz d'échappement selon la revendication 19,
**caractérisée en ce que**
une soupape à flotteur (11) est utilisée comme dispositif (11) pour gêner ou empêcher la sortie de NH₃ liquide hors du vaporisateur (10).

21. Installation de purification des gaz d'échappement selon la revendication 19,
**caractérisée en ce que**
un détecteur est raccordé à la soupape à flotteur (11) pour détecter la position du flotteur.

22. Installation de purification des gaz d'échappement selon l'une quelconque des revendications 17 à 21,
**caractérisée en ce que**
un dispositif d'amenée d'air (12) est monté en aval du vaporisateur (10) pour l'amenée d'air dans le conduit d'alimentation (7).

23. Dispositif pour le maintien et le raccordement d'un réservoir d'agent réducteur (4) dans le châssis d'un système de réservoir interchangeable dans une installation de purification des gaz d'échappement (3),
**caractérisé en ce que**
le dispositif est conçu comme un dispositif d'amarrage (15) et est muni d'un dispositif d'accouplement, une partie d'accouplement (22) du dispositif d'accouplement étant associée au dispositif d'amarrage (15) et l'autre partie d'accouplement (20) au réservoir d'agent réducteur (4) maintenu dans le dispositif d'amarrage (15),
les deux parties d'accouplement (20, 22) pouvant être mises en prise l'une avec l'autre à l'aide d'un déplacement axial dirigé à l'opposé l'une de l'autre et le dispositif d'amarrage (15) et le au moins un réservoir d'agent réducteur (4) comportant des moyens de guidage concourants (21, 26, 27, 28) grâce auxquels le au moins un réservoir d'agent réducteur (4) peut être amené, guidé, dans sa position déterminée pour la jonction des deux parties d'accouplement (20, 22), le dispositif d'amarrage (15) comprenant des tiges de guidages (F) sur lesquelles le au moins un réservoir d'agent réducteur (4) peut être amené dans sa position déterminée et sur lesquelles s'appuie le réservoir d'agent réducteur (4).

24. Réservoir pour agent réducteur, qui contient du NH₃ sous forme pure ou liée, destiné à être utilisé dans une installation de purification des gaz d'échappement (3) selon l'une quelconque des revendications 1 à 22,
**caractérisé en ce que**
le réservoir (4) comporte une surface d'enveloppe cylindrique et la partie d'accouplement (20) est disposée au sommet du réservoir (4), une prise (17) étant disposée au pied pour la manipulation du réservoir d'agent réducteur (4) lors de l'introduction dans le dispositif d'amarrage (15) et de la mise en prise des deux parties d'accouplement (20, 22) l'une avec l'autre.

25. Réservoir selon la revendication 24,
**caractérisé en ce que**
la prise (17) est un anneau entourant le fond (B) du réservoir d'agent réducteur (4) avec des ouvertures de prise (G) ménagées dedans.

26. Réservoir selon l'une quelconque des revendications 24 ou 25,
**caractérisé en ce que**
la surface extérieure dans la zone d'un point de réchauffement local du réservoir (4) réchauffé par une source de chaleur est noircie.

27. Réservoir selon l'une quelconque des revendications 24 à 26,
**caractérisé en ce que**
la surface intérieure dans la zone d'un point de réchauffement local du réservoir (4) réchauffé par une source de chaleur est pourvue de moyens grâce auxquels une formation de bulles de vapeur est favorisée.

28. Réservoir selon la revendication 27,
**caractérisé en ce que**
la surface intérieure dans la zone du point de réchauffement local du réservoir (4) réchauffé est dépolie.

29. Réservoir selon la revendication 27,
**caractérisé en ce que**
les prises sont faites dans une matière ayant une faible conductivité thermique, par exemple une matière plastique.
